# FASCICULE DE BREVET EUROPEEN

(11) **EP 0 650 665 B1**
(45) Date de publication et mention de la délivrance du brevet: **05.01.2000**
(21) Numéro de dépôt: 94402332.4
(22) Date de dépôt: 18.10.1994
(51) Int. Cl.: A01F 25/20

(54) **Dispositif de sécurité latérale pour une fraise de désilage**
Sicherheitsvorrichtung für die Seite einer Silagefutterentnahmevorrichtung
Security side system for silage loader

(30) Priorité: 27.10.1993 FR 9312815
(43) Date de publication de la demande: 03.05.1995
(73) Titulaire: Kuhn-Audureau S.A., 85260 La Copechagniere (FR)
(72) Inventeur: Bonnaudet, Jean-Claude, F-85260 l'Herbergement (FR)
(74) Mandataire: Fruchard, Guy

(56) Documents cités:
- DE-A- 1 481 446
- DE-A- 3 837 509
- FR-A- 2 541 860
- FR-A- 2 618 047

## Description

La présente invention concerne un dispositif de désilage comportant un dispositif de sécurité latérale pour une fraise de désilage.

On connaît des fraises de désilage destinées à prélever de la matière ensilée sur un tas d'ensilage tout en assurant un hachage de la matière afin de permettre une distribution aisée de celle-ci. Les fraises de désilage comportent généralement un tambour muni de dents et recouvert sur un côté d'un capot qui assure à la fois une protection de l'utilisateur contre un risque de contact avec les couteaux et un guidage de la matière hachée vers le caisson dans lequel la matière ensilée est prélevée en vue de sa distribution. Ce capot n'assure aucune protection latérale de la fraise.

Or, il est dangereux de laisser les extrémités de la fraise dégagées lorsque celle-ci n'est pas utilisée et se trouve au voisinage du sol car il existe alors un risque d'accidents, ces accidents étant particulièrement importants en raison de la vitesse élevée de rotation de la fraise et de la grande inertie de celle-ci.

Pour éviter ce risque, il est connu, notamment du document FR-A-2 618 047, de monter sur les extrémités de la fraise des tôles de protection fixes. Toutefois, ces tôles fixes viennent interférer avec la matière ensilée lors du prélèvement par la fraise et gênent le mouvement de descente de la fraise dans le tas d'ensilage.

On connaît également des dispositifs de sécurité latérale pour une fraise de désilage comportant des panneaux amovibles qui sont fixés aux extrémités de la fraise en dehors des moments d'utilisation de celle-ci. La mise en place et le retrait des panneaux de sécurité amovibles impliquent cependant que l'utilisateur descende du tracteur auquel est attelée la désileuse et se rende successivement sur chaque côté de la fraise de désilage pour retirer ou remettre les panneaux de sécurité. Cette manoeuvre est donc particulièrement fastidieuse pour des exploitations de grandes dimensions où il est nécessaire d'effectuer une série d'allers et retours entre le tas d'ensilage et le lieu de distribution de la matière ensilée. En outre, la mise en place et le retrait des plaques de sécurité amovibles peut se révéler elle-même source de danger si les panneaux sont retirés alors que la fraise a déjà été mise en route ou s'ils sont remis en place avant que la fraise ne soit totalement arrêtée.

Un but de l'invention est de proposer un dispositif de désilage qui comporte des moyens de sécurité latérale pour la fraise de désilage se mettant en place et se retirant automatiquement sans intervention d'un opérateur.

En vue de la réalisation de ce but, on propose selon l'invention un dispositif comprenant une fraise de désilage ayant des extrémités montées sur des poutres d'une armature support mobile associée à un caisson comportant un fond ayant un bord extrême s'étendant en regard de la fraise et des parois latérales encadrant le fond, le dispositif comportant des panneaux escamotables disposés pour recouvrir totalement les extrémités de la fraise pour une position de non utilisation de la fraise et pour s'escamoter lors d'un appui sur un tas de matière à désiler.

Ainsi, dès que l'on quitte l'appui sur un tas d'ensilage les panneaux escamotables viennent automatiquement en position de sécurité pour assurer un recouvrement latéral de la fraise de désilage.

Selon une première version de l'invention, les panneaux escamotables sont portés par les parois latérales et s'étendent en saillie au-delà du bord extrême du caisson pour une position de non-utilisation de la fraise.

Selon des aspects avantageux de l'invention, les panneaux escamotables sont montés articulés autour d'axes disposés pour que les panneaux escamotables reviennent dans une position en saillie sous l'effet de leur propre poids, et/ou le dispositif de sécurité comporte des moyens de rappel des panneaux escamotables vers leur position en saillie.

Selon une deuxième version de l'invention, les panneaux escamotables sont portés par les poutres de l'armature support.

D'autres caractéristiques et avantages de l'invention apparaîtront à la lecture de la description qui suit de deux modes de réalisation particuliers non limitatifs de l'invention en liaison avec les dessins ci-joints parmi lesquels :
- la figure 1 est une vue en perspective partielle d'une désileuse comportant un dispositif de sécurité latérale de fraise de désilage selon un premier mode de réalisation de l'invention,
- la figure 2 est une vue en élévation de côté du dispositif de sécurité latérale de la figure 1,
- la figure 3 est une vue en élévation depuis l'arrière d'une partie d'un dispositif de sécurité latérale selon le premier mode de réalisation de l'invention,
- la figure 4 est une vue en élévation de côté d'un second mode de réalisation du dispositif de sécurité latérale selon l'invention.

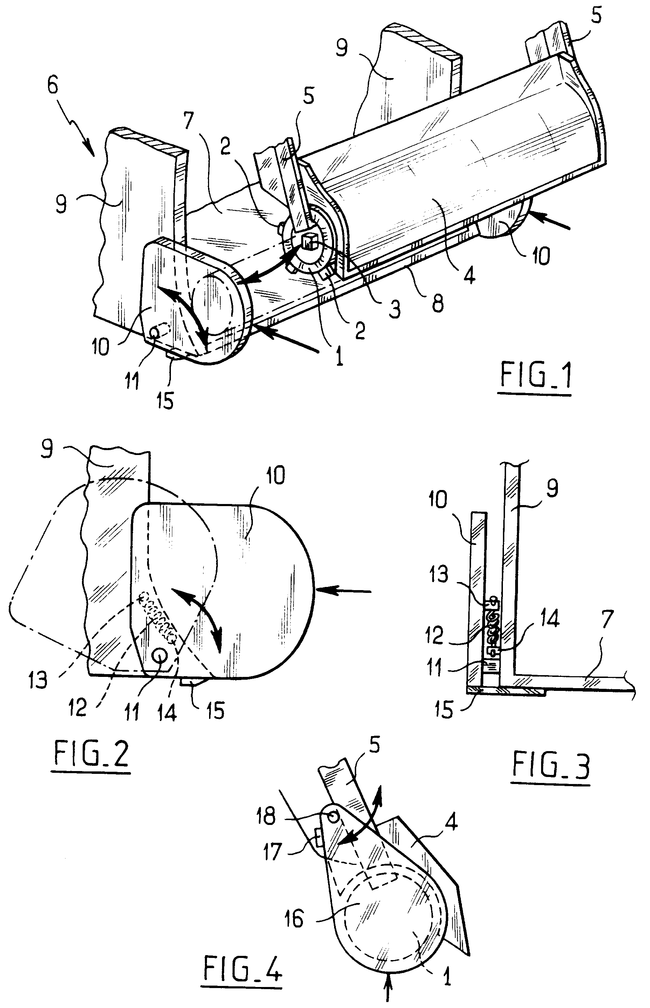

En référence aux figures 1 à 3, le premier mode de réalisation de l'invention est décrit en relation avec une fraise de désilage comportant de façon classique un tambour 1 portant des dents 2 radialement en saillie vers l'extérieure et entraîné en rotation par un moteur hydraulique 3 convenablement relié à une centrale hydraulique de véhicule tracteur par des conduits non représentés. Sur un côté tourné vers l'extérieur, la fraise de désilage est protégée par un capot 4 qui recouvre le tambour 1 sur toute sa longueur. La fraise de désilage est portée par deux poutres support 5 s'étendant aux extrémités de la fraise et associées d'une façon connue en soi à un caisson généralement désigné en 6 et comportant un fond 7 ayant un bord extrême 8 s'étendant en regard de la fraise et des parois latérales 9 encadrant le fond.

Dans ce premier mode de réalisation de l'invention, le dispositif de sécurité latérale comporte des panneaux escamotables 10 portés par les parois latérales 9 du caisson et montés pour pivoter autour d'axes 11 fixés aux parois latérales 9. Dans le mode de réalisation illustré, les axes 11 sont disposés au voisinage du coin inférieur avant des panneaux escamotables 10 de façon que le poids des panneaux tende à ramener ceux-ci dans une position où ils s'étendent en saillie au-delà du bord extrême 8 du caisson comme illustré sur la figure 1 et en trait plein sur la figure 2.

Pour accentuer le mouvement de retour des panneaux 10 vers leur position en saillie, le dispositif de sécurité comporte de préférence pour chaque panneau escamotable 10 un ressort 12 ayant une extrémité fixée à un ergot 13 fixé au panneau escamotable 10 et une extrémité opposée fixée à un ergot 14 porté par un panneau latéral 9 en un point décalé de l'axe de pivotement 11. Pour éviter un pivotement des panneaux 10 au-delà d'une position sensiblement horizontale vers l'arrière, le dispositif comporte également des butées 15 fixées sous le fond du caisson 6 et s'étendant latéralement en saillie pour limiter la course de pivotement des panneaux escamotables 10.

Dans la position de non-utilisation de la fraise, les panneaux escamotables 10 s'étendent en saillie vers l'arrière, et la fraise est disposée entre les panneaux escamotables 10 comme illustré en traits mixtes sur la figure 1 de façon que ces extrémités soient recouvertes par les panneaux escamotables 10.

Lors d'une utilisation de la fraise de désilage, celle-ci est levée pour être disposée sur le dessus du tas d'ensilage avant sa mise en rotation et le bord extrême 8 du caisson est amené en appui contre le tas d'ensilage. Dans ce mouvement le tas d'ensilage exerce un appui sur le bord extrême des panneaux escamotables 10 comme illustré par une flèche horizontale en trait épais sur la figure 1 et sur la figure 2, et les panneaux 10 pivotent autour des axes 11 pour prendre une position relevée comme illustré en traits mixtes sur la figure 2. Ce mouvement de pivotement exerce une traction sur les ressorts 12 qui se tendent. Dans cette position les panneaux escamotables 10 ne gênent pas la mise à l'aplomb du fond du caisson avec la fraise de sorte que la matière hachée par la fraise de désilage est totalement recueillie dans le caisson. Lorsque l'opération de désilage est terminée, le caisson est légèrement avancé de sorte que les panneaux escamotables 10 reviennent dans leur position en saillie vers l'arrière sous l'effet de leur propre poids et des ressorts de rappel 12.

En référence à la figure 4 on a illustré un second mode de réalisation de l'invention dans lequel des panneaux escamotables 16 sont cette fois portés par les poutres support 5 et s'étendent au-delà des extrémités des poutres support 5 pour recouvrir les extrémités du tambour 1. Les panneaux 16 sont montés pour pivoter autour d'axes 18 excentrés par rapport à la fraise.

Comme précédemment le mouvement des panneaux escamotables 16 est limité par des butées 17 sur lesquelles les panneaux escamotables 16 prennent appui lorsque la fraise de désilage n'est pas en position d'utilisation.

Lors de l'utilisation, la fraise est amenée en appui sur le dessus d'un tas d'ensilage de sorte que la matière ensilée exerce sur les panneaux escamotables 16 une force de relevage symbolisée par une flèche verticale sur la figure 4 et fait pivoter les panneaux 16 autour de leur axe de pivotement 18.

Bien entendu l'invention n'est pas limitée aux modes de réalisation illustrés et on peut y apporter des variantes de réalisation sans sortir du cadre de l'invention tel que défini par les revendications.

En particulier, bien que l'invention ait été illustrée par des panneaux escamotables montés pour pivoter sur leur support, on peut également réaliser l'invention avec des panneaux escamotables montés pour coulisser soit sur le châssis soit sur les poutres support du tambour.

## Revendications

1. Dispositif de désilage comprenant une fraise de désilage ayant des extrémités montées sur des poutres (5) d'une armature support mobile associée à un caisson (6) comportant un fond (7) ayant un bord extrême (8) s'étendant en regard de la fraise et des parois latérales (9) encadrant le fond, caractérisé en ce que le dispositif comporte des panneaux escamotables (10, 16) disposés pour recouvrir totalement les extrémités de la fraise pour une position de non utilisation de la fraise et pour s'escamoter lors d'un appui sur un tas de matière à désiler.

2. Dispositif de désilage selon la revendication 1, caractérisé en ce que les panneaux escamotables (10) sont portés par les parois latérales (9) et s'étendent en saillie au-delà du bord extrême (8) du caisson (6) pour une position de non utilisation de la fraise.

3. Dispositif de désilage selon la revendication 2, caractérisé en ce que les panneaux escamotables (10) sont montés articulés autour d'axes (11) disposés pour que les panneaux escamotables reviennent dans leur position en saillie sous l'effet de leur propre poids.

4. Dispositif de désilage selon la revendication 2 ou la revendication 3, caractérisé en ce qu'il comporte des moyens de rappel (12) des panneaux escamotables (10) vers leur position en saillie.

5. Dispositif de désilage selon la revendication 1 caractérisé en ce que les panneaux escamotables (16) sont portés par les poutres (5) de l'armature support.

6. Dispositif de désilage selon la revendication 5, caractérisé en ce que les panneaux escamotables sont montés articulés autour d'axes (18) disposés pour que les panneaux escamotables (16) reviennent sous l'effet de leur propre poids dans une position de recouvrement des extrémités de la fraise.

## Claims

1. Silo unloading device comprising a silo-unloading tool with ends mounted on beams (5) of a mobile support frame associated with a box structure (6) which has a bottom (7) with an end edge (8) extending opposite the silo-unloading tool and side walls (9) flanking the bottom, ***characterized in*** that the device comprises retractable panels (10, 16) designed to completely cover the ends of the silo-unloading tool when the silo-unloading tool is in a position of non-use and to retract when pressed down onto a heap of material to be unloaded.

2. Silo unloading device according to Claim 1, ***characterized in*** that the retractable panels (10) are borne by the side walls (9) and project beyond the end edge (8) of the box structure (6) when the silo-unloading tool is in a position of non-use.

3. Silo unloading device according to Claim 2, ***characterized in*** that the retractable panels (10) are mounted articulated about axes (11) arranged so that the retractable panels return to their projecting position under the effect of their self weight.

4. Silo unloading device according to Claim 2 or Claim 3, ***characterized in*** that it comprises means (12) of returning the retractable panels (10) to their projecting position.

5. Silo unloading device according to Claim 1, ***characterized in*** that the retractable panels (16) are borne by the beams (5) of the support frame.

6. Silo unloading device according to Claim 5, ***characterized in*** that the retractable panels are mounted articulated about axes (18) arranged so that the retractable panels (16) return to a position in which they cover the ends of the silo-unloading tool under the effect of their self weight.

## Patentansprüche

1. Siloentnahmevorrichtung mit einer Silofräse, die an Trägern (5) eines beweglichen Traggestells angebrachte Enden aufweist, wobei das Traggestell einem Kasten (6) zugeordnet ist, der einen Boden (7) mit einem sich gegenüber der Fräse erstreckenden Außenrand (8) und den Boden einrahmende Seitenwände (9) aufweist, ***dadurch gekennzeichnet,*** daß die Vorrichtung Klapptafeln (10, 16) aufweist, die zur vollständigen Bedeckung der Enden der Fräse für eine Nichtgebrauchsposition der Fräse und zum Wegklappen bei einer Abstützung auf einem Silogutstapel angeordnet sind.

2. Siloentnahmevorrichtung nach Anspruch 1, ***dadurch gekennzeichnet,*** daß die Klapptafeln (10) durch die Seitenwände (9) getragen werden und für eine Nichtgebrauchsposition der Fräse über den Außenrand (8) des Kastens (6) hinausragen.

3. Siloentnahmevorrichtung nach Anspruch 2, ***dadurch gekennzeichnet,*** daß die Klapptafeln (10) gelenkig um Achsen (11) angebracht sind, die so angeordnet sind, daß die Klapptafeln unter der Wirkung ihres Eigengewichts in ihre herausragende Position zurückkehren.

4. Siloentnahmevorrichtung nach Anspruch 2 oder 3, ***dadurch gekennzeichnet,*** daß sie Mittel (12) zum Zurückholen der Klapptafeln (10) in ihre herausragende Position aufweist.

5. Siloentnahmevorrichtung nach Anspruch 1, ***dadurch gekennzeichnet,*** daß die Klapptafeln (16) von Trägern (5) des Traggestells getragen werden.

6. Siloentnahmevorrichtung nach Anspruch 5, ***dadurch gekennzeichnet,*** daß die Klapptafeln gelenkig um Achsen (18) angebracht sind, die so angeordnet sind, daß die Klapptafeln (16) unter der Wirkung ihres Eigengewichts in eine Position zur Abdeckung der Fräsenenden zurückkehren.
